(19) Europäisches Patentamt
European Patent Office
Office européen des brevets

(11) Veröffentlichungsnummer: **0 287 085 B1**

(12) **EUROPÄISCHE PATENTSCHRIFT**

(45) Veröffentlichungstag der Patentschrift: **01.09.93**

(51) Int. Cl.5: **C09D 183/06**, C09D 127/06

(21) Anmeldenummer: **88105919.0**

(22) Anmeldetag: **14.04.88**

(54) **Siliconhaltige Anstrichsysteme.**

(30) Priorität: **16.04.87 DE 3713126**

(43) Veröffentlichungstag der Anmeldung:
**19.10.88 Patentblatt 88/42**

(45) Bekanntmachung des Hinweises auf die Patenterteilung:
**01.09.93 Patentblatt 93/35**

(84) Benannte Vertragsstaaten:
**AT BE CH DE ES FR GB IT LI NL SE**

(56) Entgegenhaltungen:
**EP-A- 0 117 608**
**DE-A- 1 671 280**
**US-A- 3 294 709**

(73) Patentinhaber: **WACKER-CHEMIE GMBH**
**Hanns-Seidel-Platz 4**
**D-81737 München(DE)**

(72) Erfinder: **Sittenthaler, Wilhelm, Dr.-Dipl.-Chem.**
**Robert-Koch-Strasse 136**
**D-8263 Burghausen(DE)**
Erfinder: **Marquardt, Klaus, Dr.-Dipl.-Chem.**
**Lindacherstrasse 77**
**D-8263 Burghausen(DE)**
Erfinder: **Deubzer, Bernward, Dr.-Dipl.-Chem.**
**Virchowstrasse 14**
**D-8263 Burghausen(DE)**
Erfinder: **Eglseder, Anton**
**Röntgenstrasse 25**
**D-8263 Burghausen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft siliconhaltige, insbesondere pigmentierte Anstrichsysteme. Solche Anstrichsysteme eignen sich besonders zum Beschichten von mineralischen Untergründen, beispielsweise von Baustoffen wie Putz, Beton, Asbestzement, Naturstein und dergleichen mehr.

Aus DE-PS 1 284 007 (ausgegeben am 07. August 1969, S. Nitzsche et al., Wacker-Chemie GmbH) sind Anstrichmittel auf der Grundlage von wäßrigen Dispersionen von Organopolysiloxanen und organischen Harzen bekannt, welche Alkalimetallsalze der Kieselsäure oder Methylkieselsäure enthalten. In DE-AS 1 671 280 (ausgegeben am 04. November 1971, S. Nitzsche et al., Wacker-Chemie GmbH) sind Imprägniermittel für Baustoffe auf der Grundlage von Lösungen von Methylpolysiloxanen in organischen Lösungsmitteln beschrieben.

Aufgabe der vorliegenden Erfindung war es, Anstrichsysteme zu entwickeln, die die damit behandelten Oberflächen hydrophobieren, d. h. für (flüssiges) Wasser, wie beispielsweise Regen, abweisend machen. Eine weitere Aufgabe der Erfindung war es, Anstrichsysteme zu entwickeln, die die damit behandelten Oberflächen hydrophobieren, wobei eine hohe Kohlendioxid- und Wasserdampfdurchlässigkeit des Anstrichs gewährleistet ist. Desgleichen war es Aufgabe der Erfindung, pigmentierte polysiloxanhaltige Farben zu entwickeln, die nach dem Auftragen gute Witterungsbeständigkeit aufweisen.

Die vorstehend geschilderten Aufgaben werden durch die vorliegende Erfindung dadurch gelöst, daß Anstrichmittel entwickelt wurden auf der Grundlage von wäßrigen Dispersionen von

a) Organopolysiloxanen und

b) Ethylen-Vinylchlorid-Copolymer,

wobei sich die weiteren Merkmale aus Anspruch 1 ergeben.

Die erfindungsgemäßen Anstrichmitteln enthalten Organopolysiloxane der Formel

$$R_n \, Si(OR')_m \, O_{\frac{4-n-m}{2}} \quad , \qquad (I)$$

wobei

- $\underline{R}$ gleiche oder verschiedene, gegebenenfalls durch Amino- oder Halogenreste substituierte Kohlenwasserstoffreste mit 1 bis 18 Kohlenstoffatomen bedeuten, deren Kohlenwasserstoffkette durch Aminogruppen oder Sauerstoffatome unterbrochen sein kann,
- $\underline{R'}$ gleiche oder verschiedene Wasserstoffatome oder $C_1$-$C_3$-Alkylreste sind,
- $\underline{n}$ eine Zahl mit einem Durchschnittswert von 0,5 bis 2,2, vorzugsweise 0,9 bis 1,7 ist,
- $\underline{m}$ eine Zahl mit einem Durchschnittswert von 0 bis 0,5 ist und

die Summe von n und m die Zahl 3 nicht übersteigen sollte.

Als Reste R′ sind der Methyl- und der Ethylrest sowie das Wasserstoffatom bevorzugt. Als Reste R sind gegebenenfalls durch Amino- oder Fluor- oder Chlorreste substituierte Alkyl-, Cycloalkyl-, Aryl-, Alkaryl- und Aralkylreste mit 1 bis 12 Kohlenstoffatomen bevorzugt.

Beispiele für bevorzugte Reste R sind Alkylreste, wie der Methyl-, Ethyl-, n-Propyl-, iso-Propyl-, n-Butyl-, sec-Butyl-, t-Butylrest, Pentylreste, wie der n-Pentyl und der neo-Pentylrest, Hexylreste, wie der n-Hexylrest, Heptylreste, Octylreste, wie der n-Octyl-, 2,2,4-Trimethylpentyl- und Isooctylrest, sowie Nonyl-, Decyl-, Undecyl- und Dodecylreste; Arylreste, wie der Phenylrest; Alkarylreste, wie o-, m-, p-Tolylreste sowie Xylylreste;

Aralkylreste, wie der Benzyl- und 2-Phenylethylrest.

Beispiele für aminosubstituierte Reste R sind Aminoalkylreste, wie der Aminomethyl-, Aminoethyl-, 3-Amino-n-propyl-, N,N-Dimethylamino-n-propyl-, N-(2-Aminoethyl)-3-aminopropylrest, der N,N-Dimethylaminoethyl-, N,N-Diethylaminoethyl-, N,N-Diethylamino-n-propylrest, Aminodecylreste, Aminododecylreste u. a. mehr.

Beispiele für halogenierte Reste R sind der Chlormethyl-, Trifluormethyl-, 3,3,3-Trifluor-n-propyl-, 2,2,2,2′,2′,2′-Hexafluorisopropylrest, Hexafluorisopropyloxypropylreste, Chlorphenylreste und dergleichen mehr.

Beispiele für Reste R mit durch Sauerstoffatome unterbrochener Kohlenwasserstoffkette sind Ethoxy-n-propyl- und Methoxy-n-propylreste.

Ganz besonders bevorzugt als Reste R sind gegebenenfalls durch Aminoreste substituierte Alkyl-, Alkaryl-, Aralkyl-, Cycloalkyl- und Arylreste mit 1 bis 12 Kohlenstoffatomen.

Es kann eine Art von Organopolysiloxan, es kann auch ein Gemisch von mindestens 2 Organopolysiloxanen in den erfindungsgemäßen Anstrichmitteln verwendet werden. Bevorzugt sind Gemische von mindestens einem Silikonharz mit mindestens einem aminofunktionellen Polydiorganosiloxan.

Als besonders vorteilhaft hat sich die Mischung aus Silikonharzen der Formel

$R'' SiO_{3/2}$ (II),

mit linearen Polydiorganosiloxanen der Formel

$$R'''_3 SiO-[\underset{R'''}{\overset{R'''}{|}}{Si}-O]_x SiR'''_3 \quad (III)$$

erwiesen, wobei in den obigen Formeln

$\underline{R''}$ gleiche oder verschiedene Kohlenwasserstoffreste mit 1 bis 10 Kohlenstoffatomen, vorzugsweise Alkyl-, Cycloalkyl-, Aryl-, Aralkyl- und Alkarylreste bedeuten und

$\underline{R'''}$ gleiche oder verschiedene Reste, nämlich $C_1$- bis $C_{10}$ Alkylreste, Phenylreste oder amino- bzw. aminoalkyl-substituierte Alkylreste mit insgesamt höchstens 10 Kohlenstoffatomen sind.

Bevorzugte Reste $R'''$ sind Methyl- und Phenylreste sowie amino- bzw. aminoalkylsubstituierte Alkylreste mit 1 bis 8 Kohlenstoffatomen, wie beispielsweise die als Beispiele für aminosubstituierte Reste R oben aufgeführten Reste mit Ausnahme der Aminodecyl- und Aminododecylreste, mit der Maßgabe, daß mindestens durchschnittlich ein Rest $R'''$ pro Molekül eine Aminofunktion aufweist.

$\underline{x}$ bedeutet eine ganze Zahl mit einem durchschnittlichen Wert von mindestens 60.

Als weitere Bestandteile neben den genannten Organopolysiloxanen enthalten die erfindungsgemäßen silikonhaltigen Anstrichsysteme Ethylen-Vinylchlorid Copolymere. Diese Copolymere werden aus

1 bis 50 Gew.% Ethylen und

höchstens 99 Gew.% mindestens eines weiteren Monomeren hergestellt, wobei

die genannten weiteren Monomeren zu

60 bis 100 Gew.% aus Vinylchlorid und zu

40 bis 0 Gew.% aus zusätzlichen Monomeren

bestehen.

Die zusätzlichen Monomeren sind

1. Vinylester, beispielsweise Vinylacetat, Vinylpropionat, Vinylbutyrat, Vinylstearat;
2. (Meth-)acrylsäureester und Crotonsäureester, beispielsweise die Methyl-, Ethyl-, Propyl-, Butyl-, 2-Ethylhexyl-, Lauryl- und Stearylester dieser Säuren.
3. Dialkylester von ethylenisch ungestättigten $C_4$- bis $C_{18}$-Dicarbonsäuren, beispielsweise $C_1$- bis $C_{18}$-Alkylester der Malein-, Fumar- und Itakonsäuren.
4. Alpha-Olefine, wie beispielsweise Propylen, Butylen, Styrol, Vinyltoluol, Vinylether, Vinylketone.
5. Vinyl- und Vinylidenhalogenide, wie Vinylfluorid und -bromid und Vinylidenchlorid.

Solche Ethylen-Vinylchlorid-Copolymere sind bekannt. Sie können u. a. durch Emulsionspolymerisation aus ihren Monomeren unter Zugabe der üblichen Zusätze hergestellt werden.

In AU-A 88 920 82 (offengelegt am 14. April 1983, Wacker-Chemie GmbH) und EP-B 124 759 (ausgegeben am 30. Dezember 1986, entspricht CA Anmeldung Nr. 451 209, Wacker-Chemie GmbH) sind wäßrige Ethylen-Vinylchlorid-Copolymer-Dispersionen und deren Herstellung beschrieben. Aus EP-A 149 098 (offengelegt am 24. Juli 1985, entspricht US Anmeldung Nr. 665 787, Wacker-Chemie GmbH) sind entsprechende redispergierbare Pulver bekannt.

Die genannten Ethylen-Vinylchlorid-Copolymere werden vorzugsweise in Form von wäßrigen Dispersionen oder redispergierbaren Pulvern mit den übrigen Komponenten der erfindungsgemäßen silikonhaltigen Anstrichsysteme vermengt.

Die in den erfindungsgemäßen silikonhaltigen Anstrichsystemen enthaltenen Organopolysiloxane werden vorzugsweise in Form von wäßrigen Dispersionen mit dem Ethylen-Vinylchlorid-Copolymer und den übrigen Komponenten der erfindungsgemäßen Anstrichmittel vermengt.

Das Gewichtsverhältnis von Organopolysiloxanen a) zu Ethylen-Vinylchlorid-Copolymer b) beträgt von 10 : 1 bis 1 : 1, insbesondere von 4 : 1 bis 1 : 1 und ganz besonders vorzugsweise von 3 : 1 bis 1,5 : 1.

Der Gewichtsanteil des Ethylen-Vinylchlorid-Copolymeren am Gewicht des gebrauchsfähigen Anstrichsystems (Silikonharzfarbe) beträgt vorzugsweise 1 % - 5 %, insbesondere 2 % -3 %.

Vorzugsweise enthalten die erfindungsgemäßen siliconhaltigen Anstrichsysteme neben Organopolysiloxanen a), Ethylen-Vinylchlorid-Copolymer b) als weitere Komponenten c) Pigmente.

Als Pigmente sind anorganische Pigmente bevorzugt, beispielsweise Titandioxyd, Talkum, Kreide, gefälltes Calciumcarbonat, Satinweiß (Calcium-Aluminium-Sulfat), Schwerspat, Eisenoxyd, Chromoxyd, Dolomit und Ruß, die jeweils in Form von Pulvern vorliegen. Es können reine Pigmente oder Gemische von Pigmenten verwendet werden.

Des weiteren können die erfindungsgemäßen silikonhaltigen Anstrichsysteme neben Wasser, Organopolysiloxanen a), Ethylen-Vinylchlorid-Copolymerer b) und Pigmenten c) nichtwäßrige Lösungsmittel- und Dispergiermittel enthalten. Beispiele für solche Lösungsmittel sind Kohlenwasserstoffe, wie Toluol und Homologe davon; Chlorkohlenwasserstoffe, wie Trichloräthylen; Äther, wie Di-n-butyläther; Alkohole, wie Äthylalkohol; und Ketone, wie Methyläthylketon. Beispiele für Dispergiermittel sind Schutzkolloide, wie Polyvinylalkohol, der gegebenenfalls noch bis zu 40 Molprozent Acetylgruppen enthält, Gelatine und Cellulosederivate, z. B. wasserlösliche Methylcellulose; Ammonium- und Alkalimetallsalze von Polyacrylaten (z.B. Pigmentverteiler A, BASF); anionaktive Emulgatoren, wie Alkalimetall- und Ammoniumsalze der Fettsäuren, organischer Sulfonsäuren oder saurer Schwefelsäureester, wie Natriumlaurat, Natrium-Isopropylnaphthalinsulfonat und Laurylalkoholsulfonat; kationaktive Emulgatoren, wie Stearylammoniumchlorid und nichtionogene Emulgatoren, wie Sorbitmonolaurat und Polyoxyäthylenäther von Fettalkoholen oder aromatischen Hydroxyverbindungen. Die Dispergiermittel werden zweckmäßig in Mengen von 0,1 bis 5 %, bezogen auf das Gesamtgewicht von Organopolysiloxanen und Ethylen-Vinylchlorid-Copolymer verwendet. Bevorzugt als Dispergiermittel sind teilacetylierter Polyvinylalkohol und Polyoxyäthylenäther von Fettalkoholen.

Außer den bisher genannten Bestandteilen können die erfindungsgemäßen Anstrichsysteme natürlich auch weitere in Anstrichsystemen übliche Zusätze, wie Verdickungsmittel, Verschnittmittel für Pigmente, Insekticide, Fungicide, Lichtschutzmittel, wasserlösliche Farbstoffe, Absetzverhütungsmittel und Weichmacher sowie Kondensationskatalysatoren für die Organopolysiloxane enthalten.

Die erfindungsgemäßen Anstrichsysteme enthalten vorzugsweise weniger als 0,1 %, insbesondere weniger als 0,02 % Alkalimetallsalze der Kieselsäure oder der Methylkieselsäure, jeweils bezogen auf die Summe der Gewichte von Organopolysiloxanen a) und Ethylen-Vinylchlorid-Copolymer b).

Der Wassergehalt der Dispersionen ist der für das Anstrichsystem übliche; er kann z. B., bezogen auf das Gesamtgewicht der übrigen, obengenannten Bestandteile 20 - 100 %, vorzugsweise 30 bis 65 %, betragen.

Die erfindungsgemäßen Anstrichsysteme können für Innen- und Außenanstriche, z. B. auf Holz, Metallen, wie Eisen, insbesondere jedoch auf Ziegelmauern, Beton, mit Mörtel auf Grundlage von Kalk und Sand verputztem Mauerwerk, Natursteinen und anderen z.B. silikatischen Baustoffen angewendet werden. Die Anwendung kann auf beliebige Weise erfolgen, z. B. durch Aufstreichen, Sprühen oder Tauchen.

Die erfindungsgemäßen Anstrichsysteme ergeben wischfeste und kreidungsbeständige Anstriche, die eine hohe Wasserabweisungskraft und Wetterbeständigkeit sowie eine ausgezeichnete Luft- und Wasserdampfdurchlässigkeit besitzen.

Beispiel 1:

Eine Siliconfarbe wurde hergestellt durch Vermischen von

| | | | |
|---|---|---|---|
| 180 | Gew.-Teilen | | Wasser |
| 0,5 | " | " | Pigmentverteiler |
| 2,5 | " | " | Fungizid |
| 397 | " | " | Kreide |

| | | | |
|---|---|---|---|
| | 60 | Gew.-Teilen | Titandioxid |
| | 55 | " " | einer 3%igen Smektit-Suspension |
| | 70 | " " | Talkum |
| | 175 | " " | einer ca. 43 Gew.%igen wäßrigen Siliconharzdispersion mit Monoalkylsiloxaneinheiten, deren Alkylgruppen Methyl- und Isooktylgruppen sind (unter dem Handelsnamen BS 43 käuflich bei Wacker-Chemie GmbH) |
| | 10 | " " | einer ca. 50 Gew.%igen wäßrigen Dispersion eines Polydiorganosiloxans, dessen Organogruppen zu 99,3 Mol % Methyl- und zu 0,7 Mol % N(2-Aminoethyl)-3-amino-n-propyl-Gruppen sind und dessen Viskosität bei 25°C ca. 450 $mm^2/s$ beträgt |
| | 50 | " " | einer ca. 51 Gew.%igen wäßrigen Ethylen-Vinylchlorid-Copolymer-Dispersion (als Vinnapas LL500 käuflich bei Wacker-Chemie GmbH). |
| Ergibt: | 1000 | " " | Silikonharzfarbe |

Beispiel 2:

Beispiel 1 wurde wiederholt mit der Abänderung, daß statt 180 Gew.-Teilen nur 170 Gew.-Teile Wasser und statt 10 Gew.-Teilen einer ca. 50 Gew.%igen wäßrigen Dispersion eines Polydiorganosiloxans 20 Gew.-Teile einer ca. 51,3 Gew.-%igen wäßrigen Dispersion desselben Polydiorganosiloxans eingesetzt wurden.

Die gemäß den Beispielen hergestellten Siliconfarben wurden wie folgt auf Ihre Eigenschaften untersucht:

a) Lagerstabilität: Eine Probe von 50 g der Farbe wurde jeweils 1 Tag bei Raumtemperatur und anschließend in einem dicht verschlossenen Glasgefäß 28 Tage lang bei 50 °C gelagert.

b) Wasserdampfdurchlässigkeit: Die Farben wurden der Prüfung gemäß DIN 52 615 unterworfen (Prüfmethode 9).

c) Kreidungsgrad: Bestimmung gemäß DIN 53223

d) Kapillare Wasseraufnahme: Bestimmung gemäß DIN 52617 E

Die genannten Proben waren lagerstabil gemäß a), zeigten eine Wasserdampfdurchlässigkeit zwischen 95 und 98 %, keine Trocken- und Naßkreidung und geringe kapillare Wasseraufnahme, ausgedrückt durch einen w-Wert von $w \leq 0{,}1\ kg/(m^2h^{0,5})$.

**Patentansprüche**

1. Anstrichmittel auf der Grundlage wäßriger Dispersionen von

a) Organopolysiloxanen der Formel (I)

$$R_nSi(OR')_mO_{\frac{4-n-m}{2}} \quad , \quad (I)$$

wobei

R gleiche oder verschiedene, gegebenenfalls durch Amino- oder Halogenreste substituierte Kohlenwasserstoffreste mit 1 bis 18 Kohlenstoffatomen bedeuten, deren Kohlenwasserstoffkette durch Aminogruppen oder Sauerstoffatome unterbrochen sein kann,

R' gleiche oder verschiedene Wasserstoffatome oder $C_1$-$C_3$-Alkylreste sind,

n eine Zahl mit einem Durchschnittswert von 0,5 bis 2,2 ist,

m eine Zahl mit einem Durchschnittswert von 0 bis 0,5 ist und die Summe von n und m die Zahl 3 nicht übersteigen sollte und

b) Ethylen-Vinylchlorid-Copolymer, welches hergestellt wird aus

1 bis 50 Gew.-% Ethylen und

höchstens 99 Gew.-% mindestens eines weiteren Monomeren, wobei

die genannten weiteren Monomeren zu

60 bis 100 Gew.-% aus Vinylchlorid und zu

40 bis 0 Gew.-% aus Vinylestern, (Meth-)acrylsäureestern, Crotonsäureestern, Dialkylestern von ethylenisch ungesättigten $C_4$- bis $C_{18}$-Dicarbonsäuren, Alpha-Olefinen und/oder Vinyl- und Vinylidenhalogeniden bestehen, wobei das Gewichtsverhältnis von Organopolysiloxanen a) zu Ethylen-Vinylchlorid-Copolymer 10:1 bis 1:1 beträgt.

**2.** Anstrichmittel nach Anspruch 1, dadurch gekennzeichnet, daß als Organopolysiloxane a) ein Gemisch von mindestens einem Siliconharz mit mindestens einem aminofunktionellen Polydiorganosiloxan eingesetzt wird.

**3.** Anstrichmittel nach einem der Ansprüche 1 oder 2, dadurch gekennzeichnet, daß sie zusätzlich zu den Komponenten a) und b)
c) Pigmente
enthalten.

**4.** Anstrichmittel nach einem der Ansprüche 1, 2 oder 3, dadurch gekennzeichnet, daß sie, bezogen auf die Summe der Gewichte von Organopolysiloxanen a) und Ethylen-Vinyl-Chlorid-Copolymer b), weniger als 0,1 % an Alkalimetallsalzen der Kieselsäure oder der Methylkieselsäure enthalten.

**Claims**

**1.** Paint based on aqueous dispersions of

a) organopolysiloxanes of the formula (I)

$$R_nSi(OR')_mO_{\frac{4-n-m}{2}} \quad (I)$$

in which

the radicals R denote identical or different hydrocarbon radicals which are optionally substituted by amino or halogen radicals and have 1 to 18 carbon atoms, the hydrocarbon chain of which can be interrupted by amino groups or oxygen atoms,

the radicals R' are identical or different and are hydrogen atoms or $C_1$-$C_3$-alkyl radicals,

n is a number with an average value of 0.5 to 2.2,

m is a number with an average value of 0 to 0.5 and the sum of n and m should not exceed the number 3, and

b) an ethylene-vinyl chloride copolymer which is prepared from

1 to 50% by weight of ethylene and

not more than 99% by weight of at least one other monomer,
the other monomers mentioned consisting of
60 to 100% by weight of vinyl chloride and
40 to 0% by weight of vinyl esters, (meth)acrylic acid esters, crotonic acid esters, dialkyl esters of ethylenically unsaturated $C_4$- to $C_{18}$-dicarboxylic acids, alpha-olefins and/or vinyl and vinylidene halides, the weight ratio of organopolysiloxanes a) to ethylene-vinyl chloride copolymer being 10 : 1 to 1 : 1.

**2.** Paint according to Claim 1, characterised in that a mixture of at least one silicone resin with at least one polydiorganosiloxane with amino functional groups is used as the organopolysiloxanes a).

**3.** Paint according to any one of Claims 1 or 2, characterised in that it contains c) pigments in addition to components a) and b).

**4.** Paint according to any one of Claims 1, 2 or 3, characterised in that it contains less than 0.1% of alkali metal salts of silicic acid or of methyl silicic acid, based on the sum of the weights of organopolysiloxanes a) and ethylene-vinyl chloride copolymer b).

## Revendications

**1.** Produits de revêtement à base de dispersions aqueuses :
a) de polyorganosiloxanes de formule I ci-dessous :

$$R_n\ Si(OR')_m\ O_{\frac{4-n-m}{2}} \qquad (I)$$

dans laquelle
R représente des radicaux hydrocarbonés en $C_1$-$C_{18}$ identiques ou différents, avec éventuellement comme substituants des groupes amino ou des halogènes et dont la chaîne peut être interrompue par des groupes amino ou par des atomes d'oxygène,
R' représente des atomes d'hydrogène ou des alkyles en $C_1$-$C_3$ identiques ou différents,
n un nombre d'une valeur moyenne de 0,5 à 2,2, et
m un nombre d'une valeur moyenne de 0 à 0,5,
la somme n + m ne devant pas dépasser 3, et
b) d'un copolymère d'éthylène et de chlorure de vinyle que l'on prépare avec
1 à 50 % en poids d'éthylène et
au maximum 99 % en poids d'un ou de plusieurs autres monomères,
autres monomères qui sont constitués de
60 à 100 % en poids de chlorure de vinyle et
40 à 0 % en poids d'esters vinyliques, d'esters de l'acide acrylique ou méthacrylique ou de l'acide crotonique, d'esters dialkyliques d'acides dicarboxyliques à insaturation éthylénique en $C_4$-$C_{18}$,d'alpha-oléfines et/ou d'halogénures de vinyle ou de vinylidène, le rapport pondéral des polyorganosiloxanes a) au copolymère d'éthylène et de chlorure de vinyle b) étant compris entre 10 et 1.

**2.** Produit de revêtement selon la revendication 1, caractérisé en ce que les polyorganosiloxanes a) sont un mélange d'une ou plusieurs résines de silicones et d'un ou de plusieurs polydiorganosiloxanes à fonction amine.

**3.** Produit de revêtement selon la revendication 1 ou 2, caractérise en ce qu'il comprend en outre des pigments.

**4.** Produit de revêtement selon la revendication 1, 2 ou 3, caractérisé en ce qu'il contient, par rapport à la somme des poids des polyorganosiloxanes a) et du copolymère d'éthylène et de chlorure de vinyle b), moins de 0,1 % de silicates ou de méthylsilicates de métaux alcalins.